**Europäisches Patentamt**

**European Patent Office**

**Office européen des brevets**

(19)

(11) Veröffentlichungsnummer: **0 085 292**
**B1**

(12)
# EUROPÄISCHE PATENTSCHRIFT

(45) Veröffentlichungstag der Patentschrift:
**14.05.86**

(21) Anmeldenummer: **83100025.2**

(22) Anmeldetag: **04.01.83**

(51) Int. Cl.⁴: **F 16 C 29/04**

(54) **Kugellager zur längsbeweglichen Führung einer Stange mit rechteckigem Querschnitt.**

(30) Priorität: **13.01.82 DE 3200676**

(43) Veröffentlichungstag der Anmeldung:
**10.08.83 Patentblatt 83/32**

(45) Bekanntmachung des Hinweises auf die Patenterteilung:
**14.05.86 Patentblatt 86/20**

(84) Benannte Vertragsstaaten:
**DE FR IT**

(56) Entgegenhaltungen:
**CH - A - 388 700**
**DE - A - 2 319 340**
**FR - A - 2 047 132**
**FR - A - 2 226 586**
**FR - A - 2 255 497**
**FR - A - 2 260 711**
**FR - A - 2 415 748**
**US - A - 3 512 849**

(73) Patentinhaber: **INA Wälzlager Schaeffler KG,
Industriestrasse 1-3 Postfach 1220,
D-8522 Herzogenaurach (DE)**

(72) Erfinder: **Schaeffler, Georg, Dr.-Ing. E.h.,
Flughafenstrasse 11, D-8522 Herzogenaurach (DE)**

## Beschreibung

Die Erfindung betrifft ein Kugellager zur längsbeweglichen Führung einer Stange mit rechteckigem Querschnitt, das aus einem in eine zylindrische Bohrung einsetzbaren Gehäuse besteht, durch welches die Stange axial hindurchgeführt ist, und in welchem wenigstens zwei einander diametral gegenüberliegende, axial verlaufende Kugelreihen angeordnet sind, die einerseits im Kugellager und andererseits auf der Oberfläche der Stange abrollen, und die durch Schlitze im Gehäuse derart teilweise radial nach innen durchtreten, dass sie gegen Herausfallen gesichert sind.

Bei einer bekannten solchen Lagerausführung rollen die Kugeln in der Bohrung eines hohlzylindrischen äusseren Lagerteiles einerseits und auf der Oberfläche einer quadratischen Stange andererseits ab, wobei sie durch eine in das äussere Lagerteil eingesetzte dünnwandige Hülse am Herausfallen gehindert sind, indem sie durch Schlitze dieser Hülse teilweise radial nach innen hindurchtreten (CH-A-388 700).

Eine derartige, an sich durchaus funktionsfähige Lagerkonstruktion weist den Nachteil auf, dass ein bestimmtes Lagerspiel oder gar Spielfreiheit der Lagerung nur dadurch erzielt werden kann, dass eine Vielzahl von Abmessungen unterschiedlicher Bauteile äusserst präzise eingehalten werden müssen. So müssen der Bohrungsdurchmesser der Aufnahmebohrung für dieses Lager, die Wanddicke des äusseren Lagerteiles, der Kugeldurchmesser und nicht zuletzt die Abmessungen der zu lagernden Stange äusserst genau aufeinander abgestimmt werden, um das angestrebte Lagerspiel tatsächlich zu erreichen. Dies bedeutet einen erheblichen Fertigungsaufwand, der sich bei einem derartigen Massenprodukt häufig nicht rechtfertigen lässt.

Andererseits ist es bekannt, bei Längsführungslagern – wenn auch für runde Stangen – Kunststoffgehäuse vorzusehen, in welchen die Kugeln gegen Herausfallen gehalten sind, wobei man zur Bildung der Kugelaufbahnen einzelne Blechstreifen in das Kunststoffgehäuse einsetzte, die sich ihrerseits in der Wandung einer das Lager aufnehmenden Bohrung abstützen (DE-A-2 319 340). Hinsichtlich der Erreichung eines bestimmten Lagerspieles ergeben sich hier dieselben Probleme wie im vorher geschilderten Fall.

Für Wälzlager der der Erfindung zugrundeliegenden Gattung bietet sich eine Anwendungsmöglichkeit in Kraftfahrzeugen, beispielsweise in Schaltgetrieben, wo sie zur Axialführung der Schaltstangen dienen, durch welche der Gangwechsel bewirkt wird. Spielfreiheit ist gerade in diesen Einbaufällen schon deshalb erforderlich, um die in solchen Lagern gelagerten Stangen daran zu hindern, infolge der Fahrzeugvibrationen in Schwingungen zu geraten und dadurch unerwünschte Geräusche herbeizuführen.

Der Erfindung liegt die Aufgabe zugrunde, ein derartiges Wälzlager bei einfachstem konstruktiven Aufbau und problemloser Herstellbarkeit so auszuführen, dass Spielfreiheit gewährleistet ist, ohne dass an die Anschlussbauteile besondere Genauigkeitsanforderungen gestellt werden.

Diese Aufgabe wird durch die Erfindung dadurch gelöst, dass das Gehäuse des Kugellagers als Kunststoffspritzteil ausgeführt ist, in welches aus Blech gebildete Kugellaufschienen eingesetzt sind, die durch die sie abstützenden Kunststoffteile des Gehäuses so elastisch angedrückt sind, dass die Kugeln unter Vorspannung an der Stange anliegen. Durch diese Massnahme wird in einfacher Weise und insbesondere ohne dass es hierfür eines zusätzlichen Bauteiles bedürfte, unter Ausnutzung der elastischen Eigenschaften des Kunststoffes erreicht, dass die die Kugellaufbahnen bildenden Blechschienen stets die erwünschte Vorspannung auf die Kugeln aufbringen.

Das Kunststoffgehäuse kann in einer einfachen, axial teilbaren Spritzform hergestellt werden, und für die Aufnahme jeder Kugellaufschiene zwei einander gegenüberliegende axial einseitig offene Leisten aufweisen, hinter welche die Kugellaufschiene mit seitlichen Rändern eingeschoben wird, wobei die Leisten eine elastische Vorspannung auf die Kugellaufschienen ausüben. Damit die Kugellaufschienen nicht in axialer Richtung aus dem Gehäuse herausgleiten können, kann jede von ihnen an ihrem einen axialen Ende einen radial nach innen abgebogenen Lappen aufweisen, der hinter einen Absatz des Gehäuses einschnappt.

Für den Fall, dass die in dem Lager zu lagernde Stange nicht die für eine Wälzlagerung erforderliche Oberflächengüte und/oder -härte aufweist, kann zur Bildung einer geeigneten Kugellaufbahn auf die Stange ein im Querschnitt U-förmiges Blechteil aufgesetzt werden, dessen seitliche Schenkel es klemmend auf der Stange halten. Dabei kann so vorgegangen werden, dass das die Schenkel verbindende Basisteil die untere Fläche der Stange bedeckt, während die Schenkel nach oben gerichtet an den Seitenflächen der Stange anliegen und an ihren oberen Enden mit von der Stange abgekehrten Krümmungen zur Bildung von geschmiegten Kugellaufbahnen versehen sind. Auf diese Weise ist es möglich, die Stange auf den seitlichen Kugelreihen aufzuhängen, so dass sie nicht nur in horizontaler, sondern auch in vertikaler Richtung von den Kugeln geführt ist.

Um das Gehäuse einerseits und das U-förmige Blechteil im nicht eingebauten Zustand zu einer Baueinheit zu verbinden, können die seitlichen Schenkel des U-förmigen Blechteiles an ihren axialen Enden mit zu den Kugeln hin vorstehenden Flanschen versehen sein, durch welche die Axialbewegung des U-förmigen Blechteiles begrenzt wird, weil diese nach einem gewissen axialen Verschiebeweg an den Kugeln zur Anlage kommen. Durch diese Massnahme wird es gleichzeitig ausgeschlossen, dass beim Einbau des Lagers das U-förmige Blechteil vergessen, oder verkehrt herum eingebaut wird.

Schliesslich ist es möglich, die in das Kunststoffgehäuse eingesetzten Kugellaufschienen zwischen einer mittigen Kugellaufbahn und ihren seitlichen Rändern mit radial nach aussen vorstehenden Sicken zu versehen, deren Höhe so bemessen ist, dass sie sich bei überhöhter Belastung der Kugellaufbahn in der das Gehäuse aufnehmenden Bohrung abstützen.

In den Zeichnungen sind Ausführungsbeispiele der Erfindung dargestellt. Es zeigen:

Fig. 1 eine perspektivische Ansicht eines erfindungsgemässen Kugellagers,

Fig. 2 und 3 stirnseitige Ansichten zweier Ausführungsvarianten und

Fig. 4 einen Schnitt nach Linie IV–IV der Fig. 3.

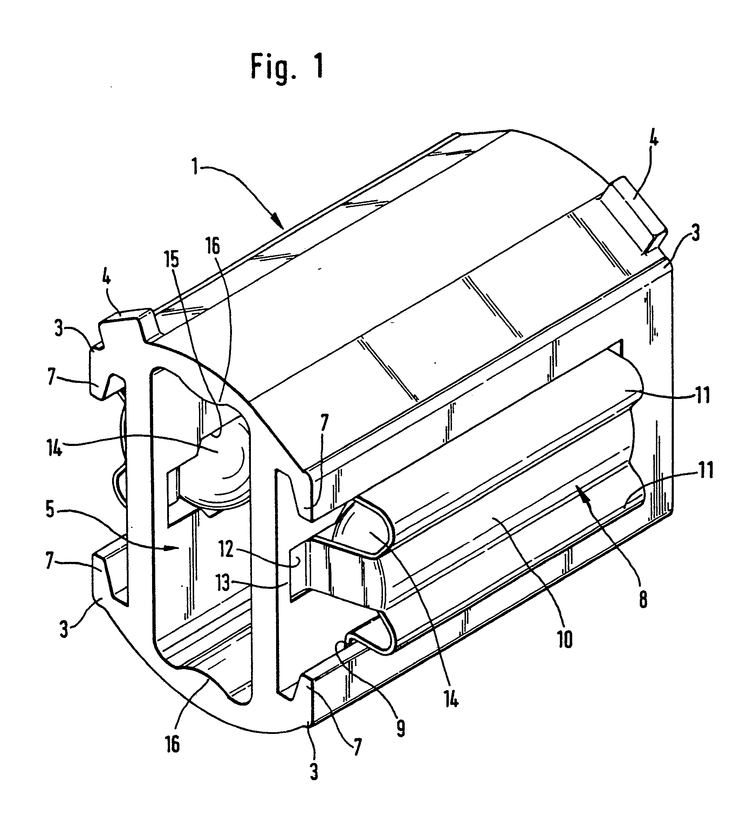

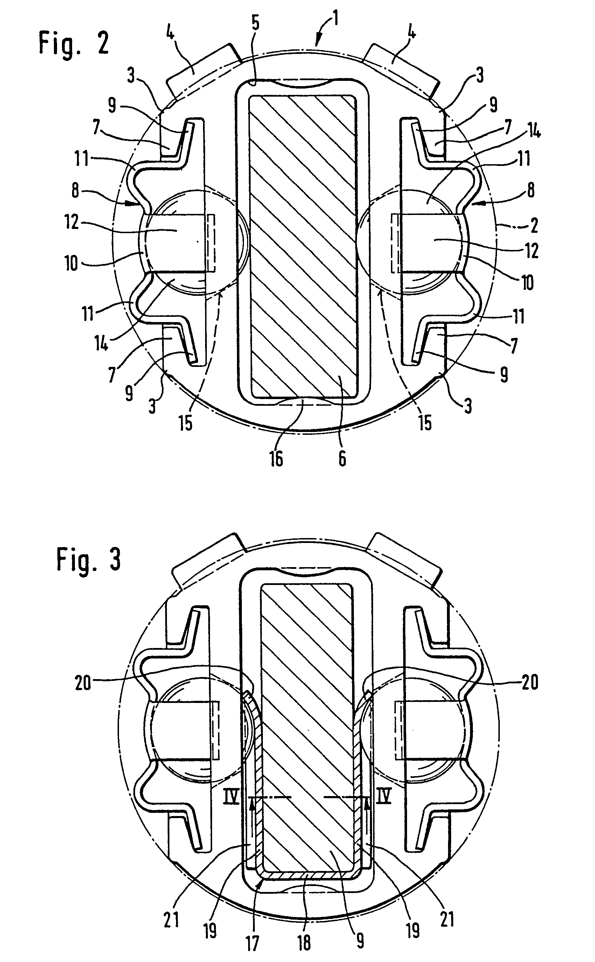

Das in den Fig. 1 und 2 dargestellte Lager besteht aus dem Kunststoffgehäuse 1, welches in seiner Aussenkontur so ausgeführt ist, dass es in eine zylindrische Gehäusebohrung eingesetzt werden kann, welche in Fig. 2 strichpunktiert angedeutet und mit 2 bezeichnet ist. Das Gehäuse liegt in der Bohrung nur an vier Stellen an, welche durch sich in Längsrichtung erstreckende Wulste 3 gebildet sind. An den übrigen Stellen ist das Gehäuse 1 gegenüber der Gehäusebohrung 2 freigestellt, um elastische Verformungen zuzulassen.

An den beiden Stirnflächen ist das Gehäuse 1 mit radial vorspringenden Nocken 4 versehen, die nach dem Einsetzen des Gehäuses 1 in eine Gehäusebohrung hinter die Stirnflächen der die Aufnahmebohrung aufweisenden Wandung greifen und dadurch eine Axialsicherung für das Gehäuse 1 bewirken. Das Einführen des Gehäuses 1 in die Bohrung wird dadurch ermöglicht, dass diese an einer Umfangsstelle eine radial vorspringende Längsnut aufweist, durch welche der eine Nocken 4 hindurchgeführt werden kann.

Das Gehäuse 1 weist eine zentrale Durchtrittsöffnung 5 für die zu lagernde Stange 6 auf. Zu beiden Seiten der Stange 6 sind im Gehäuse axial verlaufende Leisten 7 paarweise angeordnet, hinter welche die Kugellaufschienen 8 mit ihren seitlichen Rändern 9 eingeschoben sind. Die Kugellaufschienen 8 ihrerseits weisen mittig die Kugellaufbahn 10 auf, an welche sich zu beiden Seiten die radial nach aussen vorstehenden Sicken 11 anschliessen, die in ihrer radialen Höhe so bemessen sind, dass sie sich bei überhöhter Belastung der Kugellaufbahnen in der Gehäusebohrung 2 abstützen können. Zu ihrer Axialsicherung sind die Kugellaufschienen 8 an ihrem einen Ende mit einem radial nach innen abgebogenen Lappen 12 versehen, der hinter einen Absatz 13 des Gehäuses 1 eingeschnappt ist. Die Kugeln 14, die einerseits auf der Oberfläche der Stange 6 und andererseits auf der Kugellaufbahn 10 abrollen, treten teilweise durch die im Gehäuse 1 angeordneten Längsschlitze 15 radial nach innen hin durch, wodurch sie am Herausfallen gehindert sind.

Die Leisten 7 sind derart ausgebildet, dass sie so unter elastischer Vorspannung gegen die Ränder 9 der Kugellaufschienen 8 anliegen, dass sie diese radial nach innen drücken und damit dafür sorgen, dass die Kugeln 14 ständig unter Vorspannung gegen die Oberfläche der Stange 6 angedrückt werden.

Während die horizontale Führung der Stange 6 durch die beiderseits angeordneten Kugeln 14 erfolgt, stützt sich die Stange 6 in vertikaler Richtung infolge ihrer Eigengewichts auf dem in Längsrichtung verlaufenden Gehäusewulst 16 gleitend ab.

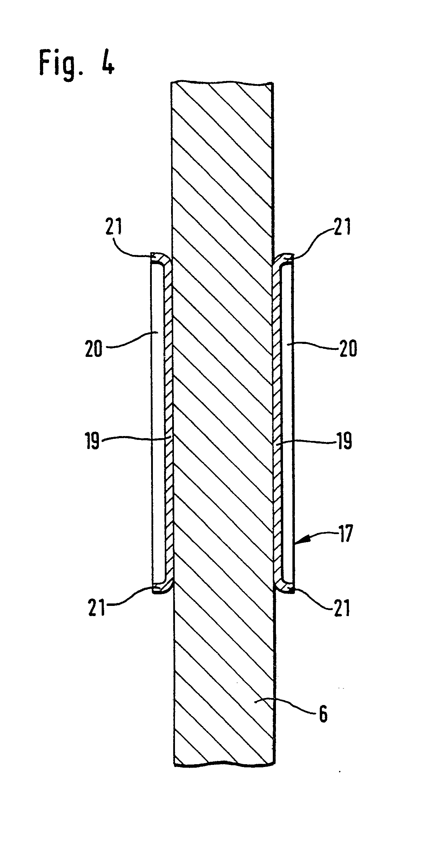

Die in Fig. 3 und in dem Teilschnitt gemäss Fig. 4 dargestellte Variante unterscheidet sich von der vorhergehenden lediglich dadurch, dass auf die Stange 6 zur Bildung einer Kugellaufbahn ein U-förmiges Blechteil 17 aufgesetzt ist, dessen Basisteil 18 die untere Fläche der Stange 6 bedeckt, während die beiden Schenkel 19 nach oben gerichtet an den Seitenflächen der Stange anliegen. An ihren oberen Enden sind die Schenkel 19 mit von der Stange abgekehrten Krümmungen 20 versehen, die eine geschmiegte Kugellaufbahn bilden, so dass auf diese Weise die Stange 6 auch zu ihrer vertikalen Führung auf den seitlichen Kugelreihen aufgehängt ist. An ihren axialen Enden weisen die seitlichen Schenkel 19 des Blechteiles 17 zu den Kugeln hin vorstehende Flanschen 21 auf, die so hinter die Kugeln greifen, dass das Blechteil 17 auch dann nicht axial aus dem Gehäuse 1 herausgleiten kann, wenn die Stange 16 noch nicht montiert.

**Patentansprüche**

1. Kugellager zur längsbeweglichen Führung einer Stange (6) mit rechteckigem Querschnitt, das aus einem in eine zylindrische Bohrung (2) einsetzbaren Gehäuse (1) besteht, durch welches die Stange (6) axial hindurchgeführt ist, und in welchem wenigstens zwei einander diametral gegenüberliegende, axial verlaufende Kugelreihen (14) angeordnet sind, die einerseits im Kugellager und andererseits auf der Oberfläche der Stange (6) abrollen, und die durch Schlitze (15) im Gehäuse (1) derart teilweise radial nach innen durchtreten, dass sie gegen Herausfallen gesichert sind, dadurch gekennzeichnet, dass das Gehäuse (1) als Kunststoffspritzteil ausgeführt ist, in welches aus Blech gebildete Kugellaufschienen (8) eingesetzt sind, die durch die sie abstützenden Kunststoffteile des Gehäuses (1) so elastisch angedrückt sind, dass die Kugeln (14) unter Vorspannung an der Stange (6) anliegen.

2. Kugellager nach Anspruch 1, dadurch gekennzeichnet, dass das Gehäuse (1), das in einer einfachen, axial teilbaren Spritzform hergestellt ist, für die Aufnahme jeder Kugellaufschiene (8) zwei einander gegenüberliegende, axial einseitig offene Leisten (7) aufweist, hinter welche die Kugellaufschiene (8) mit seitlichen Rändern (9) eingeschoben ist, wobei die Leisten (7) eine elastische Vorspannung auf die Kugellaufschiene (8) ausüben.

3. Kugellager nach Anspruch 2, dadurch gekennzeichnet, dass jede Kugellaufschiene (8) an ihrem einen axialen Ende einen radial nach innen abgebogenen Lappen (12) aufweist, der zu ihrer Axialsicherung hinter einen Absatz (13) des Gehäuses (1) eingeschnappt ist.

4. Kugellager nach einem der vorhergehenden Ansprüche, dadurch gekennzeichnet, dass auf die Stange (6) ein im Querschnitt U-förmiges Blechteil (17) aufgesetzt ist, dessen seitliche Schenkel (19) es klemmend auf der Stange (6) halten.

5. Kugellager nach Anspruch 4, dadurch gekennzeichnet, dass das die Schenkel (19) verbindende Basisteil (18) die untere Fläche der Stange (6) bedeckt, während die Schenkel (19) nach oben gerichtet an den Seitenflächen der Stange (6) anliegen und an ihren oberen Enden mit von der Stange (6) abgekehrten Krümmungen (20) zur Bildung von geschmiegten Kugellaufbahnen versehen sind.

6. Kugellager nach Anspruch 4 oder 5, dadurch gekennzeichnet, dass die seitlichen Schenkel (19) des im Querschnitt U-förmigen Blechteiles (17) an ihren axialen Enden mit zu den Kugeln (14) hin vorstehenden Flanschen (21) versehen sind.

7. Kugellager nach einem der vorhergehenden Ansprüche, dadurch gekennzeichnet, dass die Kugellaufschienen (8) zwischen einer mittigen Kugellaufbahn (10) und ihren seitlichen Rändern (9) mit radial nach aussen vorstehenden Sicken (11) versehen sind, deren Höhe so bemessen ist, dass sie sich bei überhöhter Belastung der Kugellaufbahn in der das Gehäuse (1) aufnehmenden Bohrung (2) abstützen.

**Revendications**

1. Palier à billes pour le guidage longitudinal d'une barre ou tige (6) de section droite rectangulaire, constitué par un corps ou carter (1) pouvant être inséré dans un alésage cylindrique (2), à travers lequel la barre ou tige (6) est guidée axialement, et dans lequel sont disposées au moins deux rangées de billes (14) orientées axialement et diamétrialement opposées, qui roulent d'une part, dans le palier à billes et, d'autre part, sur la surface de la barre ou tige (6) et qui s'étendent radialement de façon partielle vers l'intérieur à travers des fentes (15) du corps (1) de telle sorte qu'elles soient retenues d'une manière empêchant leur échappement, caractérisé en ce que le corps (1) est réalisé sous la forme d'une pièce produite par moulage par injection en matière plastique, dans laquelle sont insérés des rails (8) de roulement des billes formés par de la tôle, qui sont repoussés élastiquement par les parties en matière plastique du corps (1) qui leur servent d'appui de telle sorte que les billes (14) s'appliquent sous une certaine précontrainte contre la barre ou tige (6).

2. Palier à billes suivant la revendication 1, caractérisé en ce que le corps (1), qui est fabriqué dans un moule d'injection simple divisable axialement, comporte pour la réception de chaque rail (8) de roulement des billes deux barrettes (7) opposées l'une à l'autre et ouvertes axialement d'un côté, derrière lesquelles le rail (8) de roulement des billes est engagé par des rebords latéraux (9), les barrettes (7) exerçant sur le rail (8) de roulement des billes une précontrainte élastique.

3. Palier à billes suivant la revendication 2, caractérisé en ce que chaque rail (8) de roulement des billes présente à l'une de ses extrémités axiales une patte (12) repliée radialement vers l'intérieur, qui pour assurer son verrouillage axial est enclenchée élastiquement derrière un épaulement ou talon (13) du corps (1).

4. Palier à billes suivant l'une quelconque des revendications précédentes, caractérisé en ce qu'une pièce de tôle (17) ayant une section droite en forme d'U est adaptée sur la barre ou tige (6), les ailes latérales (19) de cette pièce la retenant par coincement sur la barre ou tige (6).

5. Palier à billes suivant la revendication 4, caractérisé en ce que la partie formant base (18) reliant les ailes (19) recouvre la face inférieure de la barre ou tige (6), tandis que les ailes (19), dirigées vers le haut, s'appliquent contre les faces latérales de la barre ou tige (6) et sont munies à leurs extrémités supérieures de parties incurvées (20) orientées à l'opposé de la barre ou tige (6) pour former des chemins de roulement recourbés pour les billes.

6. Palier à billes suivant la revendication 4 ou 5, caractérisé en ce que les ailes latérales (19) de la pièce de tôle (17) a section droite en forme d'U sont munies à leurs extrémités axiales de brides (21) faisant saillie en direction des billes (14).

7. Palier à billes suivant l'une quelconque des revendications précédentes, caractérisé en ce que les rails (8) de roulement des billes sont munis, entre un chemin de roulement des billes médian (10) et leurs rebords latéraux (9), de bourrelets (11) faisant saillie radialement vers l'extérieur, dont la hauteur est calculée de façon telle qu'en cas de charge excessive du chemin de roulement des billes, ils prennent appui dans l'alésage (2) recevant le corps (1).

**Claims**

1. A ball-bearing for guiding a bar (6) of rectangular cross-section for longitudinal movement, said ball-bearing consisting of a housing (1) adapted to be inserted into a cylindrical bore (2), the bar (6) passing axially through said housing (1), at least two diametrically opposite axially extending rows of balls (14) being disposed in said bearing and rolling, on the one hand, in the ball-bearing and, on the other hand, on the surface of the bar (6), the said balls so extending partially radially inwards through slots (15) in the housing (1) that they are secured against dropping out, characterised in that the housing (1) is produced as a plastics extrusion into which sheet-metal ball tracks (8) are inserted, which are so baised elastically by the plastics parts of the housing (1) which support them that the balls (14) bear against the bar (6) with pre-stressing.

2. A ball-bearing according to claim 1, characterised in that the housing (1), which is made in a single axially divisible extrusion die has two opposite strips (7) to receive each ball track (8), the said strips being open on one side axially and the ball track (8) being inserted behind the strips by lateral edges (9), the strips (7) exerting an elastic pre-stressing on the ball track (8).

3. A ball-bearing according to claim 2, characterised in that each ball track (8) has at one axial end a lug (12) bent radially inwards and engaged behind a shoulder (13) of the housing (1) in order to secure the said track axially.

4. A ball-bearing according to any one of the preceding claims, characterised in that a U-section sheet-metal part (17) is fitted on the bar (6) and its lateral limbs (19) clamp it on the bar (6).

5. A ball-bearing according to claim 4, characterised in that the base part (18) connecting the limbs (19) covers the bottom surface of the bar (6), while the limbs (19) extend upwardly and bear against the side surface of the bar (6) and have at their top ends curvatures (20) extending away from the bar (6) to form bevelled ball raceways.

6. A ball-bearing according to claim 4 or 5, characterised in that the lateral limbs (19) of the U-section sheet-metal part (17) have at their axial ends flanges (21) which project towards the balls (14).

7. A ball-bearing according to any one of the preceding claims, characterised in that the ball tracks (8) are provided with radially outwardly projecting corrugations (11) between a central ball raceway (10) and their lateral edges (9), the height of the corrugations being so dimensioned that in the event of excessive loading of the ball raceway the corrugations are supported in the bore (2) receiving the housing (1).

1/3

## Fig. 1

2/3

Fig. 2

Fig. 3

3/3

Fig. 4